# EUROPEAN PATENT APPLICATION

(11) **EP 1 818 789 A2**
(43) Date of publication of application: **15.08.2007**
(21) Application number: 07101066.4
(22) Date of filing: 24.01.2007
(51) Int. Cl.: G06F 3/041

(54) **Information processing device with electronic paper**

(30) Priority: 31.01.2006 JP 2006022999
(71) Applicant: Wacom Co., Ltd., Saitama, Saitama 349-1148 (JP)
(72) Inventor: Sadao, Yamamoto, Koshigaya-Shi Saitama-Ken 343-0026 (JP); Masahiko,Abe, Kitasaitama-Gun Saitama-Ken 349-1132 (JP)
(74) Representative: Richardt, Markus Albert

(57) **Abstract**

An information processing device including a plurality of sheet-type display devices, bound into notebook form, and a position information input portion, an input face of which can be positioned in opposition, either directly or indirectly, to the display face of any of the sheet-type display devices of the plurality of sheet-type display devices selected by the user, which detects a position specified by the user, and which associates position information for a detected position with a display position on the sheet-type display device, and inputs the information.

## Description

### CROSS-REFERENCES TO RELATED APPLICATIONS

The present application claims priority from Japanese Application No. P2006-022999, filed on January 31, 2006, which application is incorporated herein by reference to the extent permitted by law.

### BACKGROUND OF THE INVENTION

### Field of the Invention:

The present invention relates to an information processing device, and in particular relates to an information processing device having a plurality of electronic papers and other sheet-type display devices.

### Description of the Related Art:

In recent years there have been vigorous efforts to develop new electronic display media, such as electronic paper, flexible displays, and other sheet-type display devices, which incorporate advantages of paper as display media, such as excellent visibility, ease of viewing without fatigue, and foldability and otherwise excellent portability (see for example Patent Reference 1).

In this application, of course paper-like flexible display devices such as electronic paper are included in sheet-type display devices; moreover, even thin-type display device with low flexibility (for example, liquid crystal display devices), when a plurality of devices are bound into notebook form for use, are also included.

Patent Reference 1: Japanese Patent Laid-open No. 2000-47266

### SUMMARY OF THE INVENTION

However, in the present state, development of independent electronic paper and flexible display devices is being conducted with emphasis essentially placed on electronic book, electronic newspaper, flexible television, and other display applications; whereas there has not been much progress in development of devices in forms, such as notebooks, in which users can write freely.

Hence an object of the invention is to provide an information processing device which, like a notebook, has sheet-type display devices into which users can write, and which can easily be used to reference information which users have affixed or written.

The present invention provides an information processing device as claimed in claim 1. Embodiments of the invention are given in the dependent claims.

In accordance with an embodiment of the invention the information processing device comprises a plurality of sheet-type display devices bound into notebook form, and a position information input portion, an input face of which can be positioned in opposition, either directly or indirectly, to the display face of any of the sheet-type display devices of the plurality of sheet-type display devices selected by the user, which detects a position specified by the user, and which associates position information for a detected position with a display position on the sheet-type display device.

By means of this configuration, the input face of the position information input portion is positioned in opposition, either directly or indirectly, to the display face of any among the plurality of sheet-type display devices selected by the user among the plurality of the sheet-type display devices, a position specified by the user is detected, and position information for the detected position is input in association with a display position on the sheet-type display device.

In this case, a display control portion which displays information corresponding to the input position information on the selected sheet-type display device may be comprised.

Also, the display control portion may display an image, based on the input position information, as information corresponding to the input position information.

Further, the sheet-type display devices may be configured as electronic paper or flexible displays.

Moreover, the position information input portion may be positioned on the rear-face side or the front-face side of the selected sheet-type display device.

Also, the position information input portion may be configured to enable viewing of the display screen of a selected sheet-type display device positioned on the rear-face side.

Further, the position information input portion may be configured as a pressure-sensitive or an electromagnetic-induction tablet.

Further, a position indicator having at least one coil enabling the user to specify a position may be comprised, the position information input portion may comprise a plurality of loop coils, and signals may be transmitted from either one to the other between the coil and one of the loop coils to identify a position specified by the user.
Moreover, a position indicator may be comprised having at least one coil enabling the user to specify a position, and the position information input portion may be configured as an electromagnetic induction tablet, including a plurality of loop coils to receive signals transmitted from the coil of the position indicator.

Also, the position indicator may be configured as a pen-type device.

Also, a selection state specification portion, which specifies a sheet-type display device arbitrarily selected by the user from among the plurality of sheet-type display devices, may be comprised.

Further, the sheet-type display devices may each comprise an identification portion having a unique identification code, and the selection state specification portion may read the identification code from the identification portion and specify the sheet-type display device selected arbitrarily by the user.

Moreover, the sheet-type display devices may each comprise an identification portion with a unique shape, and the selection state specification portion may specify the sheet-type display device arbitrarily selected by the user based on the shape of the identification portion.

Also, the unique shapes may comprise holes formed into specific shapes, and the selection state specification portion may irradiate the position in which the hole is formed with light, and use the transmission position to specify the sheet-type display device arbitrarily selected by the user.

Further, the sheet-type display devices may comprise two display faces on the front and rear, and the selection state specification portion may specify the surface face arbitrarily selected by the user.

Moreover, the plurality of sheet-type display devices and the position information input portion may be formed integrally so as to be placed in a position directly or indirectly opposing the sheet-type display device arbitrarily selected by the user.
Also, the sheet-type display devices may comprise two display faces on the front and rear; the position information input portion may comprise a first position information input portion and a second position information input portion, to input position information corresponding to a position specified by the user associated with the display coordinates of the sheet-type display devices, and the first position information input portion and second position information input portion may be placed in a facing-pages state; and the selection state specification portion may specify the display face for display of a sheet-type display device arbitrarily selected by the user, based on position information input from either the first position information input portion or from the second position information input portion.

Further, a plurality of the sheet-type display devices may each comprise two display faces on the front and rear, and may be placeable in a facing-page state; and the selection state specification portion may specify one among the two display faces, front and rear, in a position of opposition to which the position information input portion is placed, and specify the other display face as a display face for display.

By means of this invention, an information processing device can be used in the manner of a notebook, so that a user can write information, and can easily reference information that has been affixed or written.

### BRIEF DESCRIPTION OF THE DRAWINGS

FIG. 1 is an external view of a notebook-type information processing device of an aspect;
FIG. 2 is a summary block diagram of a notebook-type information processing device of an aspect;
FIG. 3 is a summary diagram of the configuration of an underlay-type tablet;
FIG. 4 is a cross-sectional view of electronic paper;
FIG. 5 is a conceptual diagram of the electrode portion and display driver of an electrophoretic display panel;
FIG. 6 is an explanatory diagram of a mode of use of a first aspect;
FIG. 7 is an explanatory diagram of a mode of use of a second aspect;
FIG. 8 is an explanatory diagram of a mode of use of a third aspect;
FIG. 9 is an explanatory diagram of a mode of use of a fourth aspect;
FIG. 10 is an explanatory diagram of a mode of use of a fifth aspect;
FIG. 11 explains a sixth aspect; and
FIG. 12 explains a seventh aspect.

### DESCRIPTION OF THE PREFERRED EMBODIMENTS

Below, preferred aspects of the invention are explained referring to the drawings.

### [1] First Aspect

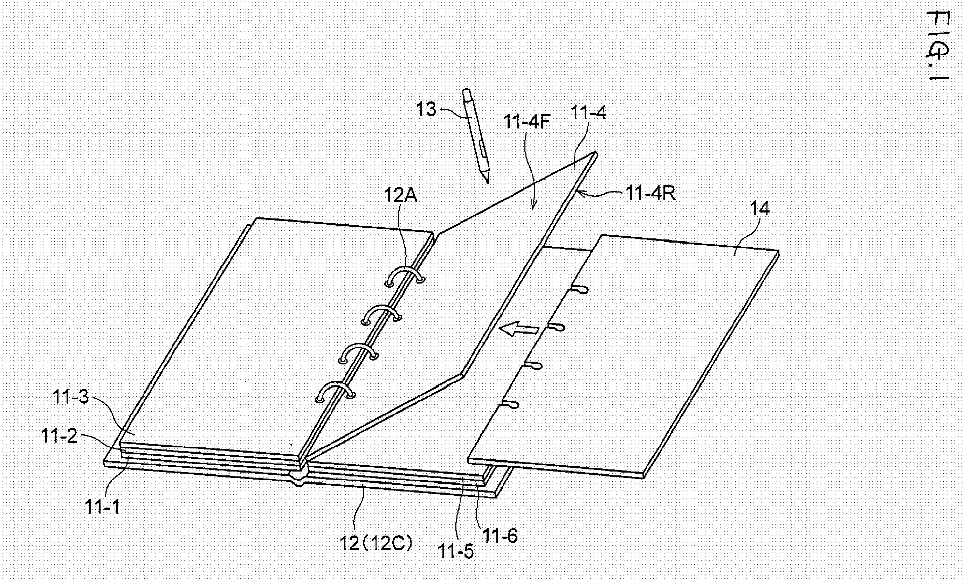

FIG. 1 is an external view of a notebook-type information processing device of an aspect.

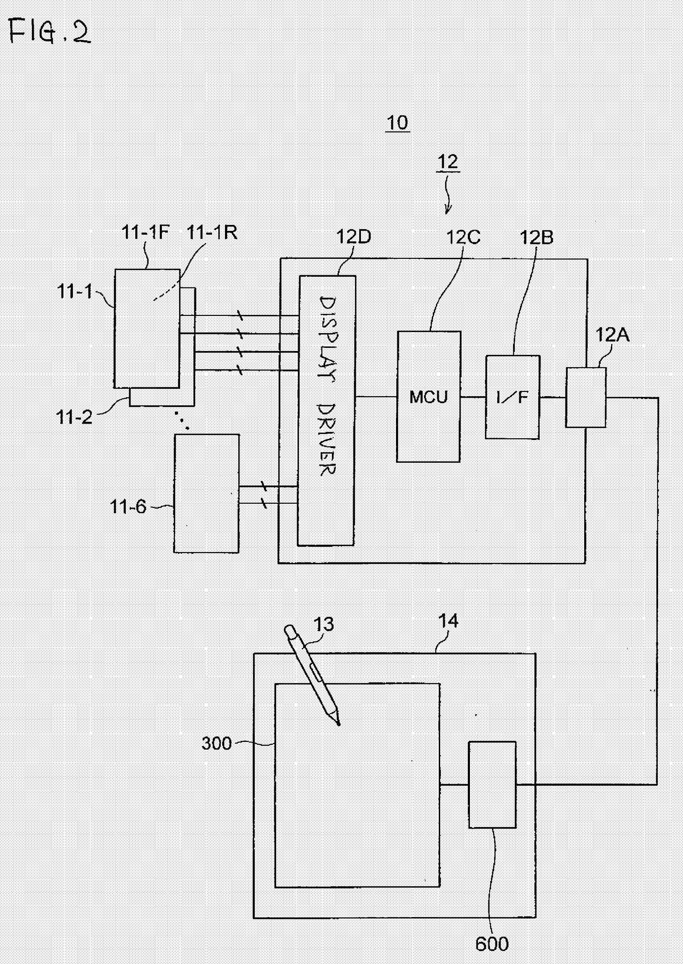

FIG. 2 is a summary block diagram of a notebook-type information processing device of an aspect.

The notebook-type information processing device 10 comprises a plurality of electronic paper sheets (sheet-type display devices) 11-1 to 11-6; a display unit 12, which holds the electronic paper sheets 11-1 to 11-6 enabling a facing-pages orientation via ring-type holders 12A having electrical connector functions, and which functions as a display control portion; and an underlay-type tablet (position information input portion) 14, removably joined to the ring-type holders 12A, to input position information corresponding to positions specified by the user using a pen-type position indicator 13 in association with display coordinates on an electronic paper sheet 11-1 to 11-6, in the display face on the surface side (in FIG. 1, in the case of the electronic paper sheet 11-4, the surface face 11-4F) of the electronic paper sheet 11-1 to 11-6 below which the tablet is placed in underlaying opposition.

The display unit 12 comprises an interface portion 12B, which performs interface operations with external equipment via the ring-type holders 12A; a microcomputer unit (MCU) 12C, configured as a microcomputer which controls the entirety of the display unit 12; and a display driver 12D, which actually drives the electronic paper sheets 11-1 to 11-6 under control of the MCU 12C.

The underlay-type tablet 14 is configured so as to enable the user to perform position specification using the pen-type position indicator 13, and comprises a position detection portion 300 which generates position detection signals in concert with the pen-type position indicator 13, and a tablet control portion 600, which generates and outputs position coordinate data based on the position detection signals generated by the position detection portion 300, and generates and outputs operation data (stylus pressure data, switch operation data and similar) for the pen-type position indicator 13.

Here, the underlay-type tablet is explained in detail.

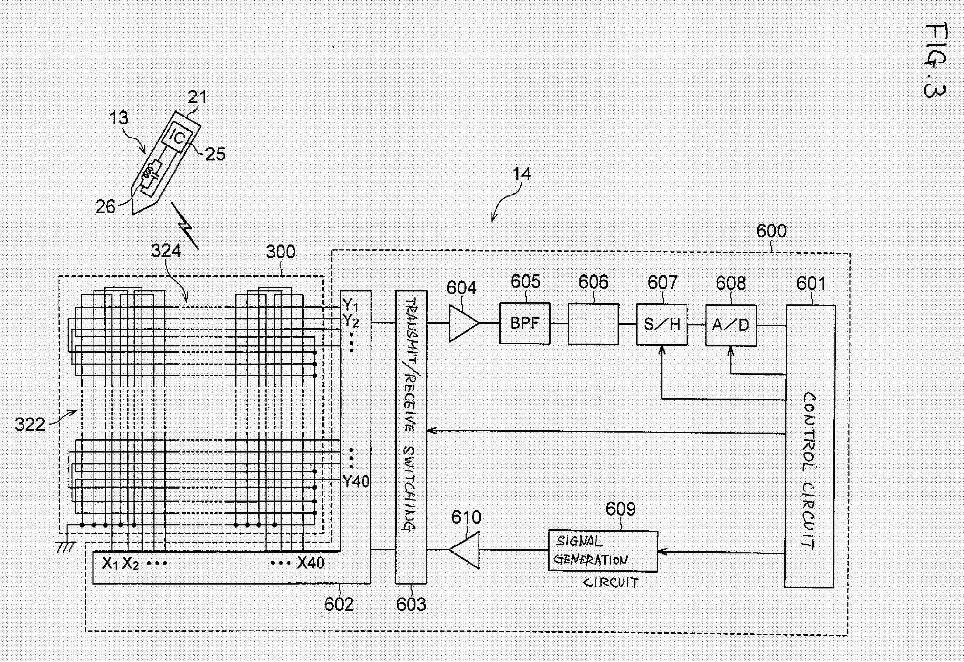

FIG. 3 shows in summary the configuration of an underlay-type tablet.

As shown in FIG. 3, the underlay-type tablet 14 is configured with each of the loop coils 322 and loop coils 324 of the position detection portion 300 connected to the underlay-type tablet 14.

The pen-type position indicator 13 comprises a resonance circuit 26 containing a coil and capacitor; the resonance circuit 26 is connected to the IC 25.

On the other hand, the tablet control portion 600 of the underlay-type tablet 14 comprises a selection circuit 602, which selects one loop coil from among the plurality of loop coils 322, 324 of the position detection portion 300, and a transmit/receive switching circuit 603, which switches between a transmission mode in which signals are transmitted to a loop coil selected by the selection circuit 602, and a reception mode in which signals are received from the pen-type position indicator 13 by the loop coil selected by the selection circuit 602.

Also, the tablet control portion 600 comprises a control circuit 601, which controls each of the portions of the underlay-type tablet 14; an amplification circuit 604, which amplifies the signal output from the transmit/receive switching circuit 603; a BPF (band-pass filter) 605, which passes only the signal component in a prescribed frequency band of the signal amplified by the amplification circuit 604; a detection circuit 606, which converts the signal component passed by the BPF 605 into a voltage value; a sample/hold circuit 607, which holds the voltage value for a prescribed time; an A/D conversion circuit 608, which converts the voltage value held by the sample/hold circuit 607 into digital data and outputs the data to the control circuit 601; a signal generation circuit 609, which generates an oscillation signal of prescribed frequency according to control by the control circuit 601; and an amplification circuit 610, which amplifies the signal generated by the signal generation circuit 609, and outputs the result to the transmit/receive switching circuit 603.

The tablet control portion 600 of the underlay-type tablet 14 uses the following procedure to detect a position input operation by the pen-type position indicator 13.

First, the control circuit 601 controls the selection circuit 602 to cause selection of one loop coil, and controls the transmit/receive switching circuit 603 to switch the operating mode to transmission mode.

Subsequently, the control circuit 601 of the tablet control portion 600 controls the signal generation circuit 609 to cause generation of a signal of prescribed frequency. This signal is amplified by the amplification circuit 610 and input to the selection circuit 602 via the transmit/receive switching circuit 603, so that current flows in the loop coil selected by the selection circuit 602 according to this signal. By this means, a magnetic field is generated in the vicinity of the loop coil.

Here, in the pen-type position indicator 13, an induced current flows in the resonance circuit 26 due to the magnetic field generated in the vicinity of the loop coils 322, 324 of the position detection portion 300, so that the IC 25 begins operation. The IC 25 generates a signal of prescribed frequency for the resonance circuit 26, and this signal is transmitted from the resonance circuit 26 to the underlay-type tablet 14.

The control circuit 601 of the underlay-type tablet 14 continues operation in the above-described transmission mode for a prescribed length of time, and then controls the transmit/receive switching circuit 603 to switch the operating mode to the reception mode. By means of this switching, a signal from the signal generation circuit 609 is no longer output to the selection circuit 602.

In this reception mode, the signal transmitted from the pen-type position indicator 13 by means of operation of the IC 25 is received by the loop coil selected by the selection circuit 602. More specifically, the operation of the IC 25 causes a signal to be applied to the resonance circuit 26, so that a current flows in the resonance circuit 26 according to this signal, a magnetic field appears in the vicinity of the resonance circuit 26, and as a result of this magnetic field, an induced current flows in the loop coils 322, 324. Then, after the induced current flowing in the selected loop coil is amplified by the amplification circuit 604, only the component in a prescribed frequency band is output by the BPF 605 to the detection circuit 606. This signal component is converted into a voltage value by the detection circuit 606, and is held by the sample/hold circuit 607. The voltage value held by the sample/hold circuit 607 is converted into digital data by the A/D conversion circuit 608 at each prescribed time interval, and the data is output to the control circuit 601.

Then, the control circuit 601 uses the selection circuit 602 to select in succession the loop coils 322, 324, and by performing computation processing of the digital data input from the A/D conversion circuit 608, identifies the loop coil closest to the position indicated by the pen-type position indicator 13, and determines the coordinates of the indicated position.

Also, while the induced current is flowing in the resonance circuit 26, the IC 25 of the pen-type position indicator 13 detects the stylus pressure applied to the core 22 (FIG. 1) and the operating states of the switches 23 and 24 (FIG. 1), and changes the transmission timing and transmission time of the oscillation signal for the resonance circuit 26 according to the stylus pressure and operating states. The change in the transmission timing and transmission time is reflected when converting the voltage value held by the sample/hold circuit 607 into digital data using the A/D conversion circuit 608. The control circuit 601 of the underlay-type tablet 14 then performs computation processing of the digital data input from the A/D conversion circuit 608, to acquire the stylus pressure and the operating states of the switches 23 and 24.

Thereafter, the control circuit 601 outputs to the display unit 12 position coordinate data corresponding to the position specified by the pen-type position indicator 13, and operating data indicating the stylus pressure of the pen-type position indicator 13 and the operating states of the switches 23 and 24.

Next, the configuration of electronic paper sheets is explained.

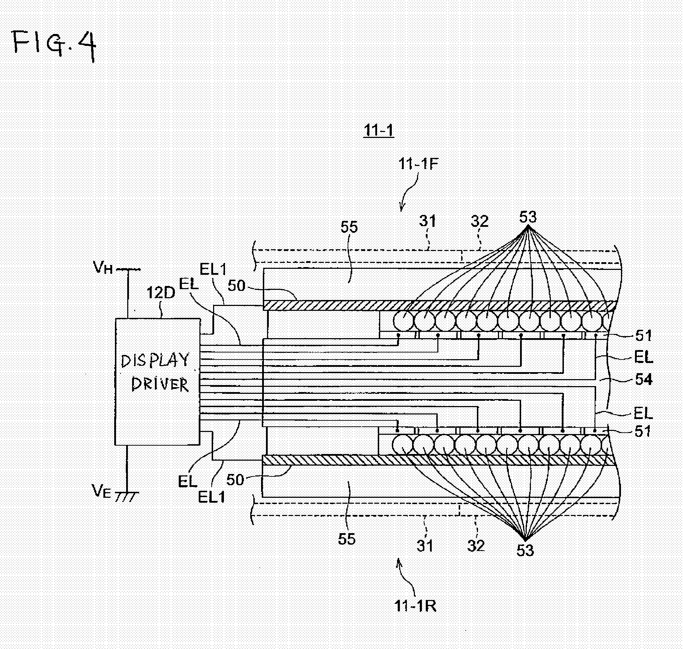

FIG. 4 is a cross-sectional view of electronic paper sheets.

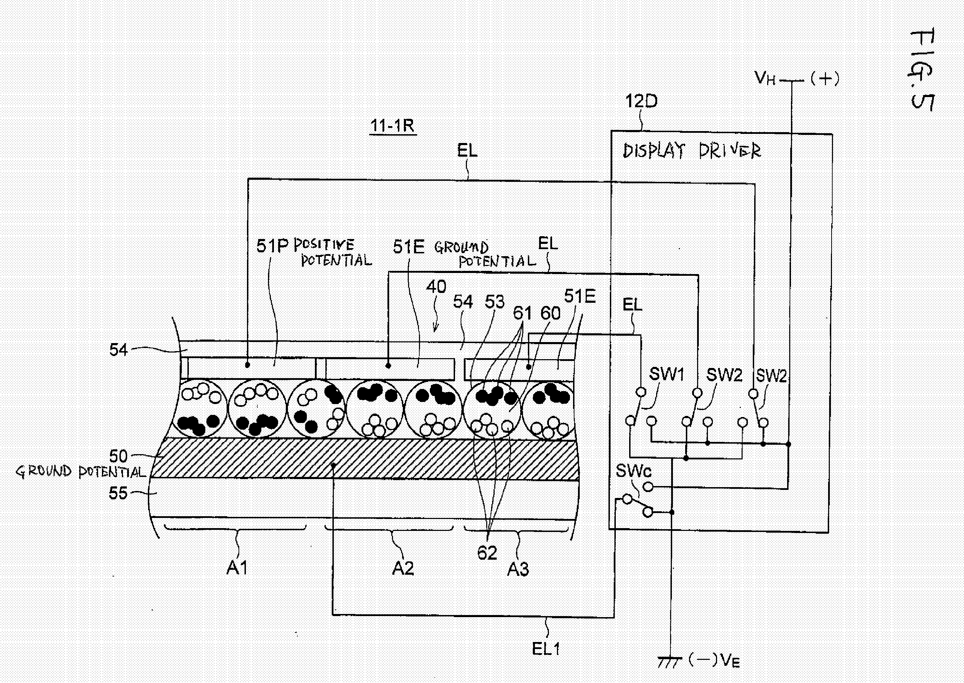

FIG. 5 is a conceptual diagram of the electrode portion and display driver of an electrophoretic display panel.

It should be noted in FIG. 4 that the case 31 and cover 32 are indicated by virtual lines together with the electrophoretic display panel. In FIG. 4 and FIG. 5, only transparent electrodes are given oblique shading, and oblique shading is omitted from other members in order to avoid complicating the drawings; moreover, electrode wiring is omitted except for the minimum amount necessary for the explanation.

The electronic paper sheets 11-1 to 11-6 each comprise two electrophoretic display panels, on the front and rear faces; because the electronic paper sheets 11-1 to 11-6 have the same configuration, in the following explanations the electrophoretic display panel 11-1 F and the electrophoretic display panel 11-1 R comprised by the electronic paper sheet 11-1 are explained as examples.

As shown in FIG. 4, the electrophoretic display panels 11-1 F, 11-1 R each have a pair, above and below, of a transparent electrode 50 and dot electrodes 51, and a plurality of microcapsules 53 enclosed between the transparent electrode 50 and dot electrodes 51. The microcapsules 53 comprise an electrophoretic layer; an electrophoretic disperse liquid 60 (see FIG. 4) is sealed within each microcapsule 53. Dot electrodes are electrodes which are provided for each dot 50 (see FIG. 5) of the electrophoretic display panels 22; these dot electrodes 51 are formed on a flexible substrate 54. The transparent electrodes (common electrodes) 50 are transparent electrodes formed by for example evaporation deposition of ITO (Indium-Tin Oxide) on a transparent glass substrate 55, and are placed in opposition to the dot electrodes 51. The transparent electrodes 50 are formed as a single electrode spanning all the dot electrodes 51.

When housing electrophoretic display panels 11-1 F, 11-1 R configured in this way in a case 31, the glass substrate 55 and transparent electrode 50 are housed in the upper face, that is, positioned on the display window side, of the case 31. Hence the display colors presented by the microcapsules are viewed through the glass substrate 55 and transparent electrode 50.

And now, driving signals of a prescribed voltage are supplied from the display driver 12D of the display unit 12 to each of the dot electrodes 51 and transparent electrodes 50 via electric wiring EL, EL1 (see FIG. 4 and FIG. 5) positioned on the flexible substrate 54, to impart an electric field to the electrophoretic disperse liquid sealed in the microcapsules 53. As shown in FIG. 5, black particles 61 colored black and white particles 62 colored white are dispersed as electrophoretic particles within the electrophoretic disperse liquid within the microcapsules. These black particles 61 and white particles 62 are charged with opposite polarities; in this aspect, the black particles 61 are positively charged, and the white particles 62 are negatively charged.

Hence the switch SWc in the display driver 12D is connected to the low-potential power supply (ground-side power supply) VE, and the transparent electrode 50 is at 0 V potential (ground potential); in addition, when the switch SW3 in the display driver 12D is connected to the high-potential power supply (positive potential) VH side, an electric field directed from the dot electrodes 51 P to the transparent electrode 50 occurs, and as shown in FIG. 5, positively-charged black particles 61 in the microcapsules 53 move to the side of the transparent electrode 50, while negatively-charged white particles 62 are drawn to the side of the dot electrode 51. As a result, the microcapsules 53 present a black color, and black is displayed in the dot display area A1.

Conversely, when the switch SWc in the display driver 12D is connected to the high-potential power supply (positive potential) VH side, and the transparent electrode 50 is at positive potential, while the dot electrodes 51 E re connected by switches SW1, SW2 in the display driver 12D to the low-potential power supply (ground power supply) VE side and held at ground potential, the negatively-charged white particles 62 in the microcapsules 53 are drawn to the side of the transparent electrode 50, and the positively-charged black particles 61 move to the side of the dot electrodes 51 E, and as a result the microcapsules 53 present a white color, so that white is displayed in the dot display areas A2 and A3.

Switching of the display is performed by operating the switches SW1 to SW3, while connecting the switch SWc alternately to the high-potential side power supply VH and low-potential side power supply VE. At this time, when no potential difference occurs between the transparent electrode 50 and the dot electrodes 51, no motion of the black particles 61 and white particles 62 occurs, and so the display color in the dot display area does not change, and the previous state is maintained.

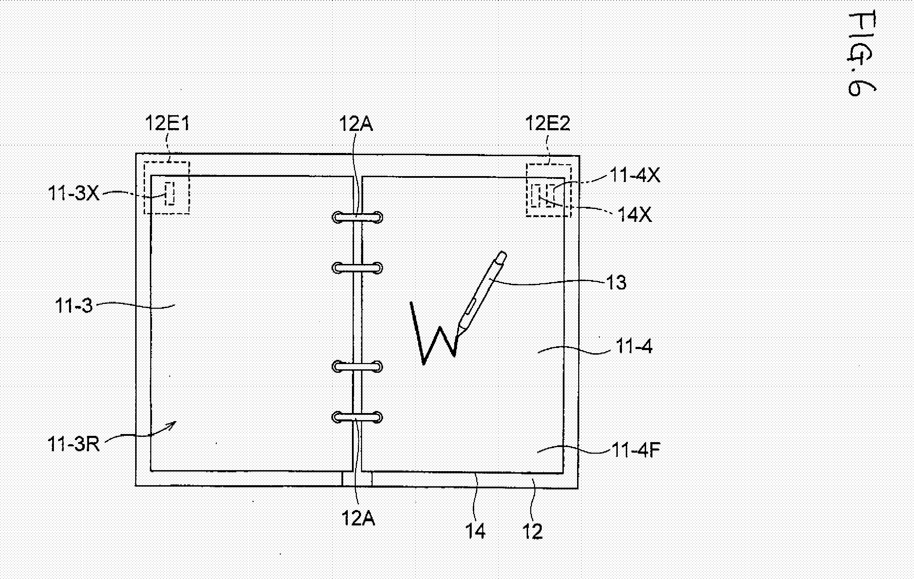

FIG. 6 is an explanatory diagram of a mode of use of a first aspect.

When actually using the notebook-type information processing device 10, the underlay-type tablet 14 is inserted such that the underlay-type tablet 14 is positioned on the rear face of the electronic paper sheet 11-4 on which operations are to be performed, and the underlay-type tablet 14 is securely installed on the ring-type holders 12A.

As a result, the underlay-type tablet 14 is electrically connected to the display unit 12.

At this time, various methods are conceivable for specifying the electronic paper 11-4 for operations; here, ultra-short-distance wireless communication unites 12E1, 12E2, with communication distances of several centimeters, are positioned apart from the display unit 12, and IC chips 11-1x to 11-6x, to which have been written unique ID codes, are embedded in each of the electronic paper sheets 11-1 to 11-6 in positions in the electronic paper sheets 11-1 to 11-6 corresponding to the ultra-short-distance wireless communication units 12E1 and 12E2.

As a result, the ID codes of the IC chips 11-1 x to 11-6x are read by the ultra-short-distance wireless communication unit 12E1 or by the ultra-short-distance wireless communication unit 12E2, and by this means the electronic paper sheet in the uppermost position can be identified. That is, in the example of FIG. 6, the ID codes of the IC chips 11-1x to 11-3x are input to the ultra-short-distance wireless communication unit 12E1, and the ID codes of the IC chips 11-4x to 11-6x are input to the ultra-short-distance wireless communication unit 12E2, so that the electronic paper sheets in the uppermost positions are the electronic paper sheet 11-3 and the electronic paper sheet 11-4.

Further, by embedding a similar IC chip 14x in the underlay-type tablet 14, and upon reading of the ID code of the IC chip 14x by the ultra-short-distance wireless communication unit 12E1 or by the ultra-short-distance wireless communication unit 12E2, it is possible to judge whether the tablet has been inserted on the left or on the right; in the example of FIG. 6, it is possible to determine that the electronic paper sheet for operations is the electronic paper sheet 11-4, and that the display face is the electrophoretic display panel 11-4F.

Hence when the user uses the pen-type position indicator 13 for input on the side of the electrophoretic display panel 11-4F, the display of the electrophoretic display panel 11-4F is changed according to this input state. That is, a position specified by the user using the pen-type position indicator 13 is detected by the underlay-type tablet 14, and position information for the detected position is input to the display unit 12 in association with the display position on the electronic paper 11 which is the sheet-type display device, so that, for example in FIG. 6, a hand-written character (in the figure, "a") is input based on input history and is displayed.

### [2] Second Aspect

In the above first aspect, the underlay-type tablet 14 is positioned on the rear-face side of the electronic paper sheet for operation; but in the second aspect, the underlay-type tablet is positioned on the surface side of the electronic paper sheet for operation.

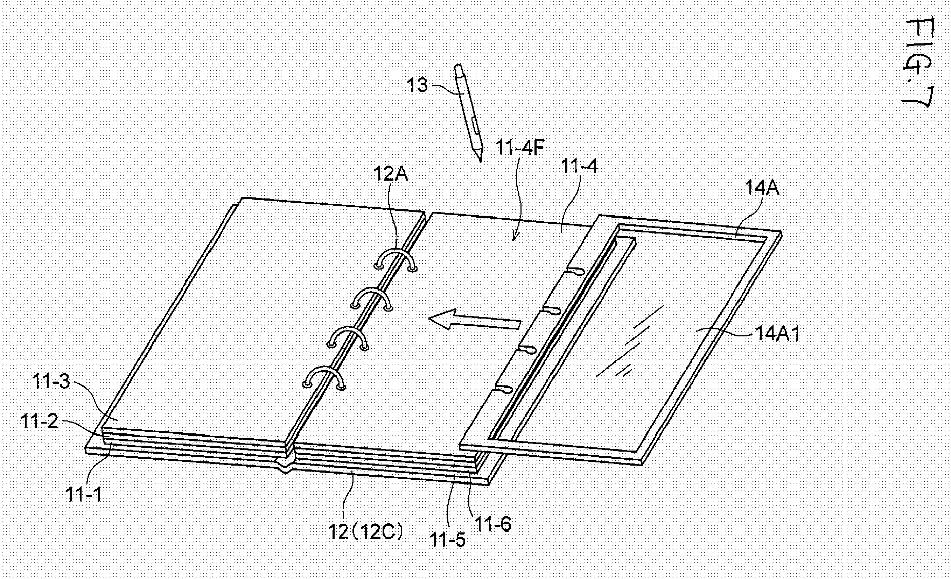

FIG. 7 is an explanatory diagram of a mode of use of a second aspect.

The underlay-type tablet 14A of the second aspect comprises a transparent window 14A1; even when mounted in the ring-type holders 12A, the rear face-side electronic paper sheets, and in the example of FIG. 7 the electronic paper sheet 11-4, can be viewed, and when the user uses the pen-type position indicator 13 to perform input to the electrophoretic display panel 11-4F on the underlay-type tablet 14A, a corresponding display appears on the electrophoretic display panel 11-4F according to the input state.

### [3] Third Aspect

In the above first aspect and second aspect, an underlay-type tablet is provided as a separate member; this third aspect is an aspect in which underlay-type tablets are provided for each of the left and right pages, and are provided integrally with the display unit 12.

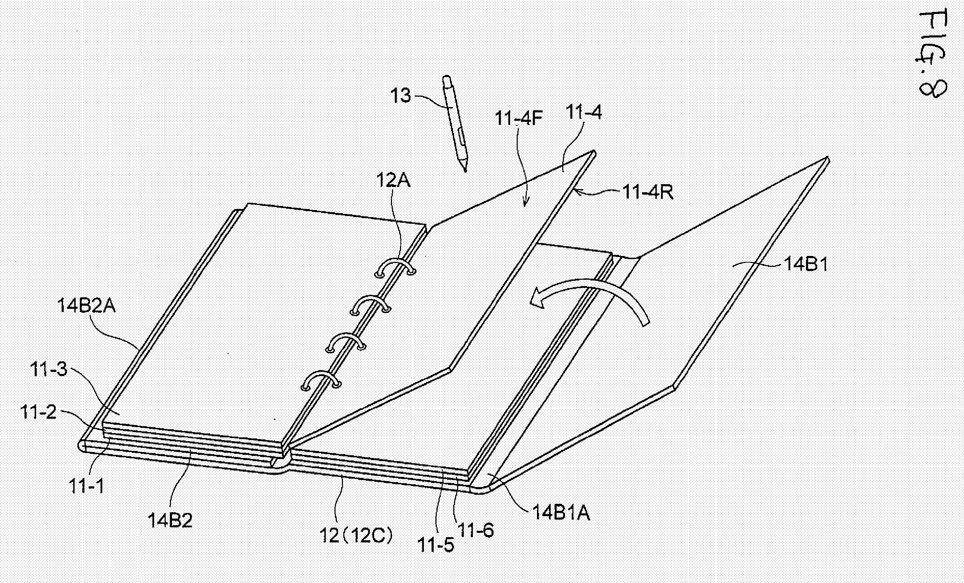

FIG. 8 is an explanatory diagram of a mode of use of the third aspect.

The underlay-type tablets 14B1, 14B2 of this third aspect are formed integrally with the display unit 12 and with hinge portions 14B1A, 14B2A which incorporate electrical wiring, and as shown in FIG. 8, by rotating for example the underlay-type tablet 14B1 in the direction of the arrow, the underlay-type tablet 14B1 is positioned and inserted at the rear face of the electronic paper sheet 11-4 on which operations are to be performed. As a result, when the user performs input on the side of the electrophoretic display panel 11-4F on the electronic paper sheet 11-4 using the pen-type position indicator 13, a corresponding display appears on the electrophoretic display panel 11-4F according to the input state.

### [4] Fourth Aspect

A fourth aspect is an aspect in which an underlay-type tablet is combined with the display unit.

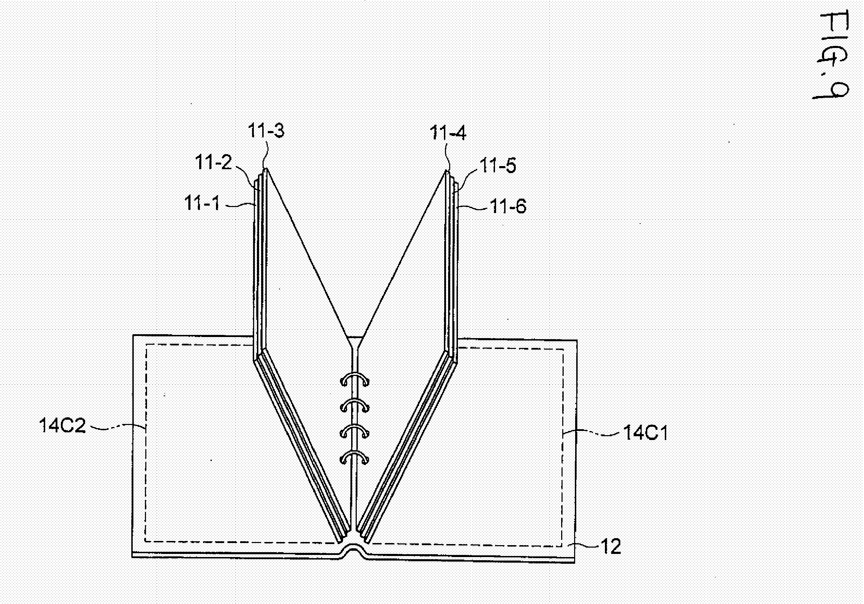

FIG. 9 is an explanatory diagram of a mode of use of the fourth aspect.

The underlay-type tablets 14C1, 14C2 in this fourth aspect are combined with the display unit 12; the electronic paper sheets for operations are arranged in a facing-pages state, and when the user uses the pen-type position indicator 13 on the electronic paper sheets to make input to one of the electrophoretic display panels, the corresponding display appears on the electrophoretic display panel.

### [5] Fifth Aspect

In the above third aspect, the underlay-type tablet was positioned on the rear-face side of the electronic paper sheet; this fifth aspect is an aspect in which the underlay-type tablet is positioned on the surface side of the electronic paper sheet for operations.

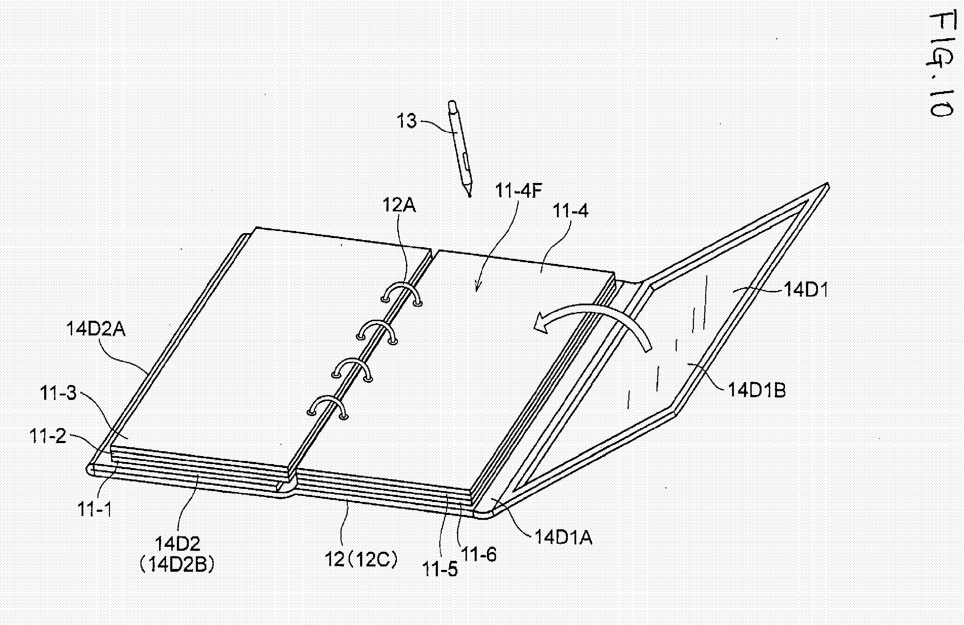

FIG. 10 is an explanatory diagram of a mode of use of the fifth aspect.

The underlay-type tablets 14D1, 14D2 of this fifth aspect comprise transparent windows 14D1 B, 14D2B. The underlay-type tablets 14D1, 14D2 are formed integrally with the display unit 12 via hinge portions 14D1A, 14D2A incorporating electrical wiring, and as shown in FIG. 10, by for example rotating the underlay-type tablet 14D1 in the direction of the arrow, the underlay-type tablet 14B1 is positioned and placed upon the surface of the electronic paper sheet 11-4 on which operations are to be performed.

As a result, the rear face-side electronic paper sheet, which in the example of FIG. 10 is the electronic paper sheet 11-4, can be viewed, and when the user uses the pen-type position indicator 13 on the underlay-type tablet 14D1 to perform input on the side of the electrophoretic display panel 11-4F, the corresponding display appears on the electrophoretic display panel 11-4F according to the input state.

In this case, if for example a member is provided to join the underlay-type tablets 14D1, 14D2 to the ring holders 12A, shifts in position can easily be eliminated, and accurate input can be performed.

### [6] Sixth Aspect

In the above first aspect, IC chips were used to specify the electronic paper sheet for operations; in this sixth aspect, a tab is provided for each electronic paper sheet, and the presence or absence of tabs is optically detected to specify the electronic paper sheet for operations.

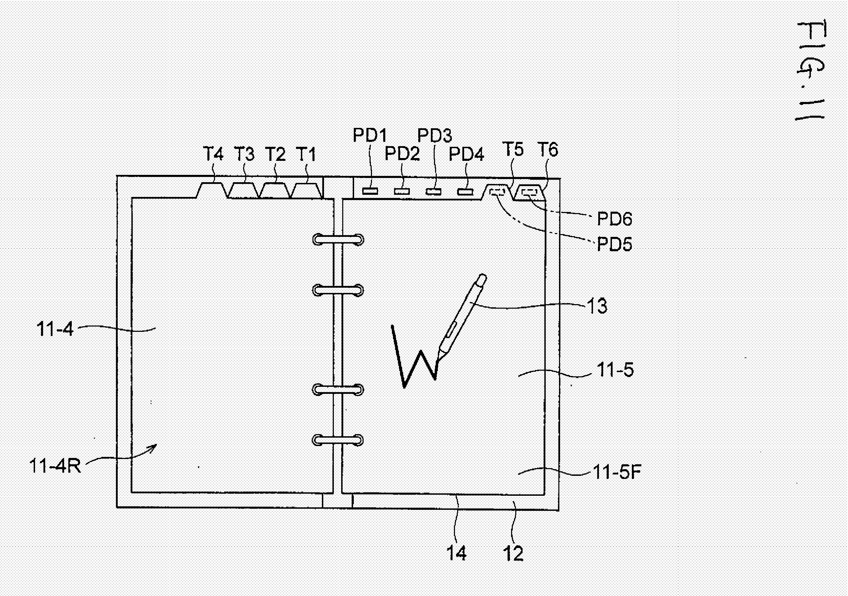

FIG. 11 explains the sixth aspect.

In the sixth aspect, tabs T1 to T6 are provided so as to protrude on the top side in the drawing from the electronic paper sheets 11-1 to 11-6, and reflection-type optical sensors PD1 to PD6 are provided at positions corresponding to the respective tabs T1 to T6 of the display unit 12.

As a result, the electronic paper sheet positioned on the uppermost side is identified based on whether detection light emitted from each of the reflection-type optical sensors PD1 to PD6 is reflected by the tabs T1 to T6. That is, in the example of FIG. 11, the detection light from the reflection-type optical sensors PD1 to PD4 is not again returned to the reflection-type optical sensors PD1 to PD4, while the detection light from the reflection-type optical sensors PD5 and PD6 is again returned to the reflection-type optical sensors PD5 and PD6, so that the electronic paper sheets in the uppermost position can be ascertained to be the electronic paper sheet 11-4 and the electronic paper sheet 11-5.

Similarly, by providing tabs on the underlay-type tablet 14 also, it is possible to judge whether the tablet is inserted on the left or on the right side; in the example of FIG. 11, the electronic paper sheet for operations can be identified as the electronic paper sheet 11-5, and the surface can be identified as the electrophoretic display panel 11-5F.

Hence when the user uses the pen-type position indicator 13 to perform input on the side of the electrophoretic display panel 11-5F, the corresponding display appears on the electrophoretic display panel 11-5F.

### [7] Seventh Aspect

In the above first aspect, IC chips were used to identify the electronic paper sheet for operations; in this seventh aspect, detection holes are provided in each electronic paper sheet, and by optically detecting the positions of the detection holes, the electronic paper sheet for operations can be identified.

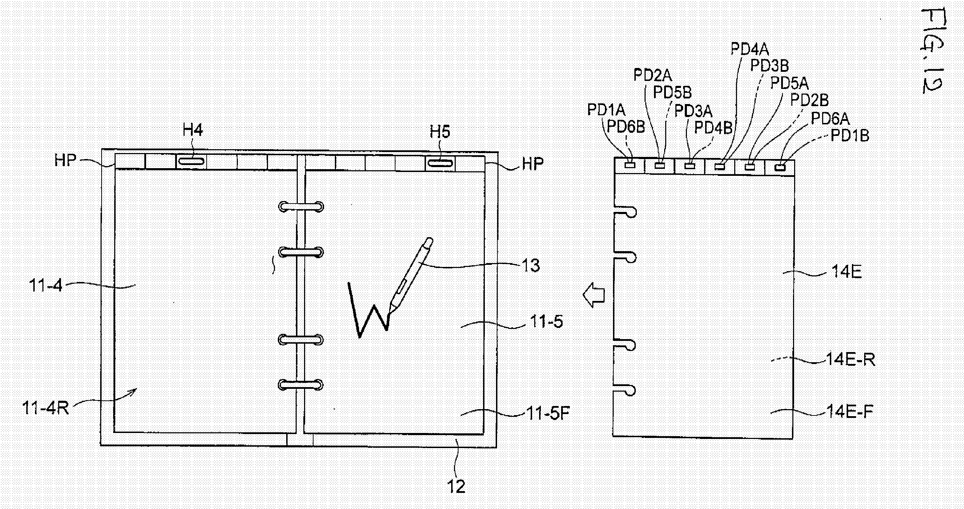

FIG. 12 explains the seventh aspect.

In this seventh aspect, detection hole formation portions HP are provided protruding on the top side in the figure in each of the electronic paper sheets 11-1 to 11-6, and detection holes H1 to H6 are provided in the detection hole formation portions HP, in positions corresponding to each of the electronic paper sheets 11-1 to 11-6. Further, reflection-type optical sensors PD1 A to PD6A are provided on the surface side 14E-F of the underlay-type tablet 14E of this aspect, in positions corresponding to the detection holes H1 to H6. Reflection-type optical sensors PD1B to PD6B are provided on the rear-face side 14E-R of the underlay-type tablet 14E, in positions corresponding to the detection holes H1 to H6.

As a result, the opposing electronic paper sheet can be identified based on whether detection light, emitted from either each of the reflection-type optical sensors PD1A to PD6A or from each of the reflection-type optical sensors PD1 B to PD6B, passes through the detection holes H1 to H6. That is, in the example of FIG. 12, the underlay-type tablet 14E is inserted from the right side, so that detection light from the reflection-type optical sensor PD5A passes through the detection hole H5, and does not return to the reflection-type optical sensor PD5A, so that the electronic paper sheet for operations can be identified as the electronic paper sheet 11-5, and the surface can be identified as the electrophoretic display panel 11-5F.

Hence when the user uses the pen-type position indicator 13 to perform input on the side of the electrophoretic display panel 11-5F, the corresponding display appears on the electrophoretic display panel 11-5F.

### [8] Advantageous Results of Aspects

As explained above, in each of the aspects, a notebook-type information processing device including a plurality of electronic paper sheets can be used in a manner similar to that of a paper notebook, so that the user can easily write information, and can easily reference information which the user has affixed or has written.

### [9] Modified Examples of Aspects

In the above explanations, double-faced electronic paper sheets were used; but single-faced sheets can be used.

In the above explanations, cases were presented in which handwritten characters were input; but operation buttons or similar may be displayed, and processing corresponding to user selection operations (file-open operation processing, processing corresponding to various instructions, and similar) may be performed.

In the above explanations, the electronic paper sheets and the underlay-type tablet were fastened using ring-type holders, enabling electrical conduction; but a plurality of dedicated connectors may be provided on the display unit side, configured such that electrical connections to the connectors are made. Further, fastening of the electronic paper sheets to the underlay-type tablet along may be performed, in a configuration in which the electronic paper sheets, underlay-type tablet, and display unit are interconnected by wireless communication.

In the above explanations, a transparent electrode (common electrode) on the electronic paper sheet side and.

In the above explanations, electrophoretic-type members were used as the electronic paper sheets which were the sheet-type display devices; but application to liquid crystal display devices, particle-movement type devices, electrode-position methods, electro-wetting methods, flexible organic EL devices, and other devices is also possible.

In the above explanations, the loop coils 322, 324 are shown in FIG. 5 as two-turn loop coils, but the number of turns is not limited in particular, and the number of loop coils in the loop coils 322, 324 is also arbitrary.

In the above explanations, the input face of the underlay-type tablet could be placed in a position in direct opposition to the display face of an electronic paper sheet which was a sheet-type display device; but a buffer member can be inserted in order to modify the writing style, or, in the case of a transparent underlay-type tablet, a sheet on which is drawn a graphic for tracing or similar may be inserted, to place the tablet in indirect opposition.

In the above explanations, a transparent electrode (common electrode) 50 and dot electrodes (matrix electrodes) 51 were provided in an electronic paper sheet which is a sheet-type display device; but if dot electrodes are provided in the underlay-type tablet, the manufacturing cost of each electronic paper sheet can be reduced. Further, if electronic paper sheets are enclosed between underlay-type tablets, transparent electrodes (common electrodes) and dot electrodes (matrix electrodes) are provided in the underlay-type tablets, and the electronic paper sheets are configured such that a flexible substrate not provided with dot electrodes and a flexible substrate in place of the glass substrate 55 are provided, then manufacturing costs can be reduced further. Also, in the cases of these configurations there is no need for rigorous positioning of the electronic paper sheets and the underlay-type tablet, and convenience of use is improved.

In the above explanations, configurations were explained in which positions are specified transmission and reception of wireless signals between the pen-type position indicator 13 and the position detection portion 300; but this invention is not limited to such configurations. For example, the pen-type position indicator 13 may incorporate a power supply device, and signals may be transmitted in one direction from the pen-type position indicator 13 to the position detection portion 3. In the above explanations, cases were explained in which the position detection portion 3 was configured as an electromagnetic induction-type tablet; but configuration as a pressure-sensitive tablet is also possible. In this case, there is no need to incorporate a coil or similar in the pen-type position indicator 13.

In the above explanations, examples were examples of application to a notebook-type information processing device; but this invention is not limited to such a configuration, and for example application to an input device connected to a desktop computer is possible, and application of this invention to a PDA (Personal Digital Assistant), electronic dictionary, equipment having the functions of a telephone, or other portable equipment, is of course also possible.

It should be understood by those skilled in the art that various modifications, combinations, sub-combinations and alterations may occur depending on design requirements and other factors, insofar as they are within the scope of the appended claims or the equivalents thereof.

### REFERENCE NUMERALS

FIG. 2
   12D DISPLAY DRIVER
FIG. 3
   601 CONTROL CIRCUIT
   603 TRANSMIT/RECEIVE SWITCHING
   606 DETECTION
   609 SIGNAL GENERATION CIRCUIT
FIG. 4
   12D DISPLAY DRIVER
FIG. 5
   12D DISPLAY DRIVER
   51 P (POSITIVE POTENTIAL)
   51 E (GROUND POTENTIAL)
   50 (GROUND POTENTIAL)

## Claims

1. An information processing device (10) comprising:
a display unit (12) comprising a plurality of sheet-type display devices (11), bound (12A) into notebook form; and
a position information input portion (14, 300, 600), an input face of which being adapted to be positioned opposite to a display face of any of said sheet-type display devices of said plurality of sheet-type display devices selected by a user, the position information input portion being operable for generating a position detection signal indicative of a position specified by said user, the display unit being operable to receive the position detection signal from the position information input portion and to associate position information for a detected position with a display position on said user selected sheet-type display device.

2. The information processing device according to claim 1, comprising a display control portion (12, 12C) for controlling said selected sheet-type display device in order to display information corresponding to said input position information.

3. The information processing device according to claim 2, said display control portion being operable for controlling said selected sheet-type display device in order to display an image based on said input position information.

4. The information processing device according to any one among claims 1 to 3, wherein said sheet-type display devices are configured as electronic paper sheets or as flexible displays.

5. The information processing device according to any one among claims 1 to 4, wherein said position information input portion is placed either on the rear-face side or on the front-face side of said selected sheet-type display device.

6. The information processing device according to any one among claims 1 to 4, wherein said position information input portion is configured such that the surface screen of said selected sheet-type display device, placed on the rear-face side, is viewable.

7. The information processing device according to any one among claims 1 to 6, wherein said position information input portion is configured as a pressure-sensitive type or as an electromagnetic induction type tablet.

8. The information processing device according to any one among claims 1 to 6, comprising a position indicator (13) having at least one coil (26) to enable said user to specify a position, and wherein said position information input portion comprises a plurality of loop coils (322, 324) exchanging signals with the at least one coil, and means (600, 601) for identifying a position specified by said user.

9. The information processing device according to any one among claims 1 to 6, comprising a position indicator (13) having at least one coil (26) to enable said user to specify a position, and wherein said position information input portion is configured as an electromagnetic induction type tablet (14) comprising a plurality of loop coils (322, 324) for receiving signals transmitted from the coil of said position indicator.

10. The information processing device according to any one among claims 7 to 9, wherein said position indicator is configured as a pen-type device.

11. The information processing device according to any one among claims 1 to 10, comprising a selection state specification portion (12E1, 12E2; PD1-PD6; PD1A-PD6B) for specifying a sheet-type display device selected arbitrarily by said user among said plurality of sheet-type display devices.

12. The information processing device according to claim 11, wherein said sheet-type display devices each comprise an identification portion (11-1x) having a unique identification code, and said selection state specification portion being operable to read said identification codes from said identification portions for identifying the sheet-type display device arbitrarily selected by said user.

13. The information processing device according to claim 11, wherein said sheet-type display devices each comprise an identification portion (T1-T6; H1-H6) having a unique shape, and said selection state specification portion being adapted to identify the sheet-type display device arbitrarily selected by said user based on the shape of said identification portion.

14. The information processing device according to claim 13, wherein said unique shapes comprise holes (H1-H6) formed in specific positions, and said selection state specification portion being operable to irradiate the position at which said holes are formed with light for identification of the sheet-type display device arbitrarily selected by said user according to the light transmission position.

15. The information processing device according to claim 11, wherein said sheet-type display devices comprise two surface faces, front and rear, and said selection state specification portion being operable to identify one of said surface faces of one of the sheet-type display devices arbitrarily selected by said user.

16. The information processing device according to any one among claims 1 to 15, wherein said display unit (12) and said position information input portion being formed integrally to enable placement in a position of opposition to the sheet-type display device arbitrarily selected by the user, wherein said position information input portion is mechanically coupled to the display unit (12) by hinge portions (14B1A, 14B2A).

17. The information processing device according to any one among claims 1 to 11, wherein
said sheet-type display devices comprise two surface faces, front and rear;
said position information input portion comprises a first position information input portion (14C1) and a second position information input portion (14C2) for input of position information corresponding to a position specified by said user, in association with display coordinates of said sheet-type display device, wherein said first position information input portion and said second position information input portion can be placed in a facing-pages state; and
said selection state specification portion being operable to identify the surface face for display of the sheet-type display device arbitrarily selected by said user, based on whether position information has been input by said first position information input portion or by said second position information input portion.

18. The information processing device according to any one among claims 1 to 11, wherein said plurality of sheet-type display devices comprise two surface faces, front and rear, and can be placed in a facing-pages state, and said selection state specification portion being operable to identify in opposition to which, among said two surface faces, front and rear, said position information input portion is positioned, and being operable to specify the other surface face as the surface face for display.
